# EUROPEAN PATENT SPECIFICATION

(11) **EP 1 077 870 B1**
(45) Date of publication and mention of the grant of the patent: **01.02.2006**
(21) Application number: 99928304.7
(22) Date of filing: 12.05.1999
(51) Int. Cl.: B63J 2/04

(54) **VENTILATION**
VENTILATION
VENTILATION

(30) Priority: 14.05.1998 SE 9801682
(43) Date of publication of application: 28.02.2001
(73) Proprietor: ABB AB, 721 83 Västeras (SE)
(72) Inventor: GÖTMALM, Örjan, S-429 30 Kullavik (SE)
(86) International application number: PCT/SE1999/000826
(87) International publication number: WO 1999/058399

(56) References cited:
- US-A- 4 711 193

## Description

### TECHNICAL FIELD

The invention relates to a ventilation system for a ship, which hereinafter also comprises other installations at sea, so-called offshore installations. The word ventilation system hereinafter refers to a system arranged for ventilation and comprising functions such as supply of fresh air, removal of used air, cooling, dehumidification and tempering, but it may also comprise filtering, enthalpy return, humidification and recirculation.

### BACKGROUND ART

Ventilation of spaces with a ship is usually taken care of by one or more centrally located air treatment units, whereby supply air and exhaust air are exchanged with the contained spaces via ventilating ducts laid in shafts. In this context it is known to place those parts of the air treatment unit which provide supply air and exhaust air separated but close to each other such that energy recovery between the system parts may be easily arranged. Such recovery systems may comprise heat exchangers or systems for enthalpy transfer, which is later on usually carried out with a so-called enthalpy wheel. It is also known to balance the thermal load of the enclosed spaces by means of the ventilation system. This may thus be carried out in substantially two ways. One way comprises supplying such an amount of tempered fresh air that the thermal load may be regulated in such a way. The other way comprises supplying only such an amount of fresh air that the requirements for change of air are satisfied and that the actual thermal load is balanced with a tempering unit, placed in the space, for supply and removal of heat. A commonly used tempering units of this kind is a unit for recirculation of the air, whereby the air is driven past a cooling unit where cold or heat may be supplied. Another tempering unit of this kind is, for example, a so-called cooling roof where the exchange of heat takes place by means of radiation.

In ships, and in particular in passenger ships, considerable demands are placed on an air treatment unit. The installation should be able to offer a comfortable indoor climate, whether the ship travels in tropical waters or in arctic waters. Known air treatment units occupy large spaces in the ships, which spaces could otherwise yield a good economic return. Ships are usually divided into isolated cells which may be fire cells, the separating "fire walls" of which must be able to prevent fire from spreading. Where ventilating ducts pass through such a fire wall, measures must thus be taken to prevent the fire from spreading through the ventilation system. To this end, fire slide valves are arranged, which are costly, require supply of electricity and extensive supervision and also entails an increase in weight.

The fresh air, which is needed to create sufficient ventilation, normally only constitute a minor part of the air volume which is supplied to the spaces of the ship. The remaining part, which constitutes about 70%, is used for balancing thermal and cooling loads. The maximum air volume is often determined by the cooling requirement when operating in tropical waters. The free air is here very warm and contains a large amount of moisture. To efficiently dehumidify the air, the air is cooled whereby the so-called dew point is passed and condensation occurs. To this end, the air is allowed to pass through a cooling battery, on the cold surfaces of which the water condenses and runs off. The cooling battery is supplied with a cooling agent of about 5-15 degrees Celsius (°C). As cooling medium there may be used a cooling liquid of the type water, salt solution, glycol water or the like, as well as an evaporated agent.

Modern cruise liners are often equipped with balcony cabins. These cabins, which may constitute more than 75% of the total number of passenger cabins, comprise, as the name implies, a private small balcony arranged in close proximity to the cabin. A balcony cabin entails large thermal loads for the cabin in tropical waters and large cooling loads in arctic waters because of the large French windows, which have poor insulation and low radiation resistance. Balancing these cooling and thermal loads by supply and removal of tempered air only therefore requires large air volumes. Large air volumes require large fans and therefore large spaces for accommodating these fans and other equipment. This results in great increases in costs and in a less cost-efficient utilization of the spaces of the ships.

One known solution for making the above-mentioned balancing more efficient and for saving spaces in the ship is by arranging local tempering units in such cabins. It is known to arrange, in such systems, so-called fan coils, which locally recirculate and temper the air. In this way, the duct volume between the cabin and the central unit is reduced in that a smaller volume of air needs to be supplied to the cabins for pure tempering purposes. On the other hand, the introduction of fan coils does not mean that the length of the duct system is reduced. The long duct systems entail a considerable increase of pressure which must be overcome by the fans.

When putting the centrally placed air treatment units into operation, extensive adjustment work is needed, which requires access to all the cabins. Often, the last cabins of the ship are completed only a few weeks before the maiden voyage is started. The work on adjusting the system is therefore often pressed for time, which entails large costs for the installer. The central systems also involve a great risk of the spread of microbes within the ship. Thus, spores, bacteria and virus may spread very rapidly to a large number of passengers and members of the crew.

### SUMMARY OF THE INVENTION

The object of the presents invention is to provide, for a ship which is divided into isolated cells, ventilation which is more cost-efficient and more volume-saving than prior art systems. The ventilation shall entail a reduced total length of ducts for supply and return of air, which, in addition to a reduction in volume, also gives a reduction in weigh. The ventilation shall also permit special fire slide valves to be excluded. The weight reduction and the excluded fire slide valves thereby entail an investment saving whereas the reduction in volume also gives rise to a more yield-promoting use of the ship. By a reduced length of ducts, the ship ventilation shall also permit a reduced energy consumption for operation of fans associated with the system as well as reduce the risk of the spread of ill-health.

The above objects are achieved according to the invention by a ventilation system according to the characteristic features described in the characterising portion of the independent claim 1 and by a method according to the characteristic features described in the characterising portion of the independent claim 6. Advantageous embodiments are described in the characteristic portions of the dependent claims.

By providing each isolated cell, and in particular each cabin, with its own ventilation system, the need of ventilating ducts from a centrally located air treatment system may be eliminated. The term isolated cell hereinafter includes a part of the ship which, vertically, occupies the space between two decks and which, laterally, is limited by at least one outer wall and by fire-zone-separating or watertight structures or otherwise such limiting surfaces which may not, without special arrangements, be penetrated by air ducts. Each isolated cell thus may comprise a plurality of cabins but may also relate to one single cabin only. Since according to the invention no ducts pass between the isolated cabins, consequently no fire slide valves are needed and the risk of the spread of ill-health is reduced.

According to the invention, a ventilation system, comprising all the functions which may be obtained from a centrally located air treatment unit, is thus placed in each isolated cell, which may be a cabin. The systems, which are individual for each cabin, thus comprise functions such as supply of fresh air, removal of used air, cooling and dehumidification, but may also comprise filtering, enthalpy return, tempering, humidification and recirculation. In its simplest form, the system comprises an air treatment unit with only one fan and one cooler as well as ducts for supply air and exhaust air. The installation parts for supply air and exhaust air are placed close to, but separated from, one another, such that a system for the energy recovery between the parts may be achieved in a simple manner. All communication of air takes place directly through the outer wall of the isolated cell.

Especially in the balcony cabins, where the actual fire wall is recessed about 1.5 metres, the air treatment unit may be placed adjacent to the outer wall itself. Whether to place the unit on the inside or on the outside of this wall is of no consequence. Openings for supply air and exhaust air are arranged in the wall. This can be arranged with one common opening or with several openings. Usually, a hole made in the ship's side may be reinforced in order not to encroach upon the strength of the ship. This may be achieved by a welded-on collar or a tube welded into the hole. Air ducts are then drawn towards the interior of the cabin for ventilation thereof. Inner cabins arranged within the same isolated cell may in similar manner be ventilated through air treatment units placed in the cabin or adjacent to the outer wall.

### BRIEF DESCRIPTION OF THE DRAWINGS

The invention will be described in greater detail in the following by description of an embodiment with reference to the accompanying drawings, wherein
- Figure 1: shows a three-dimensional section of a ship's side with a number of cabins equipped with a ventilation system according to the invention, and
- Figure 2: schematically shows a circuit diagram for a ventilation system according to further embodiments of the invention, for a balcony cabin and for an inner cabin.

### DESCRIPTION OF PREFERRED EMBODIMENTS

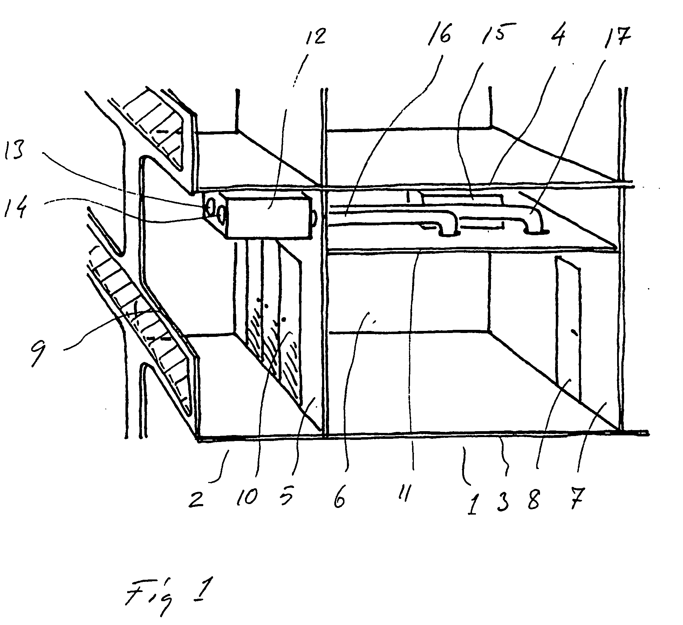

The section of a ships's side, indicated in Figure 1, shows a cabin 1, which comprises a balcony 2. The cabin is limited vertically by a lower deck 3 and an upper deck 4. Laterally, the cabin is limited by an outer wall 5, a first partition 6, a second partition (not shown) and an inner wall 7. The inner wall 7 separates the cabin from a corridor (not shown) and comprises a door 8 for passage to the corridor. The partitions separate cabins at the same level along the ship's side. The balcony 2, which is located outside the cabin, is limited, besides by the decks, the partitions and the outer wall 5, also by an outer rail 9. The outer wall 5 comprises a passageway between the cabin and the balcony and is, in the example, formed as a door portion 10 with a plurality of sliding doors, which for the most part are provided with glass portions. The outer wall is thus recessed and extends in parallel with the ships's side along the ship and is the actual limiting surface for the interior of the ship.

The cabin is provided with a ceiling 11, above which there is a space for laying of cables, ducts, etc. An air treatment unit 12 is arranged on the outside of the outer wall 5. The air treatment unit comprises an opening for supply air 13 and an opening for exhaust air 14. One side of the unit connects with the ship's side, whereby a system of ducts is arranged to penetrate the outer wall for supply and removal of air. A supply air duct 16 thus extends forwards in the space between the ceiling and the upper deck and opens out through the ceiling into the cabin. An exhaust air duct 17 extends in the same way forwards through the space between the ceiling and the upper deck and opens out through the ceiling into the cabin. Above the ceiling in the cabin there is also arranged a recirculation unit 15, which recirculates the air present in the cabin whereby it supplies or carries away heat from the air.

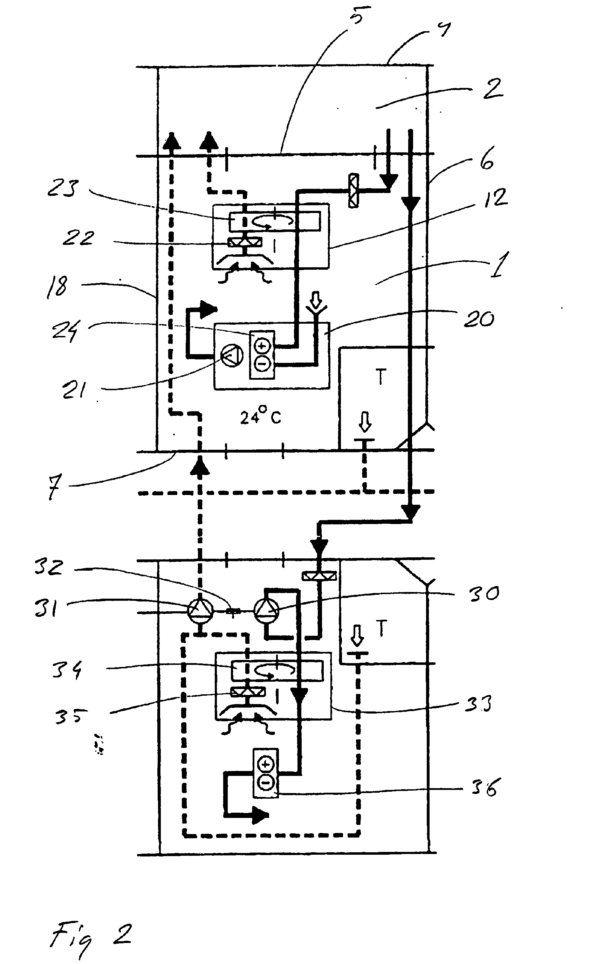

The circuit diagram in Figure 2 shows another embodiment of the invention for a ventilation system and also comprises a unit for tempering the existing air in the cabin. The upper part of the diagram in Figure 2 shows an outer cabin 1, which comprises a balcony 2. The balcony is limited outwards by a rail 9 and inwards by an outer wall 5 whereas the cabin is limited by an outer wall 5, a first partition 6, a second partition 18, and an inner wall 7. The cabin includes a toilet designated T. An air treatment unit 12 is arranged close to the outer wall but is, in this embodiment, arranged on the inside and thus placed in the cabin. The air treatment unit is suitably placed above the ceiling. A tempering unit 20 for recirculation as well as heating and cooling, respectively, of air is, in the example shown, also located in the cabin. The two units cooperate in such a way that the tempering unit contains a supply air fan 21, which attends to the change of air in the cabin but which also serves as a recirculation fan. By the supply air fan, an overpressure is created in the cabin, whereby exhaust air is driven through the air treatment unit out into the open air. The air treatment unit comprises a filter 22 and an enthalpy wheel 23. The recirculation unit 20 comprises a cooling unit 24 which, depending on the need during various seasons, may respectively cool and heat the air flowing through the unit. In the example shown, an evacuation channel is arranged from the toilet to a ventilation system (not shown). This exhaust air may, however, equally be arranged via the local ventilation system in the cabin, as shown in the lower part of the diagram.

In the lower part of the diagram according to Figure 2, an additional embodiment of a ventilation system according to the invention is shown. In this example, an supply air fan 30 and an exhaust air fan 31 are interconnected by a common shaft and driven by a common motor 32. An air treatment unit 33 is arranged in the cabin and comprises an enthalpy wheel 34 as well as a filter 35. A tempering unit 36, comprising a cooling unit only, is also arranged in the cabin. Both the air treatment unit and the tempering unit are suitably placed above a ceiling in the cabin. Channels for supply air and exhaust air are, in the example, extended through the balcony cabin to the outer wall where they open out.

The ventilation system according to the invention, as it is shown in the above examples, in all cases makes use of the realisation that a ventilation system for each isolated cell or cabin includes a saving of the total length of air ducts in the ship. The locally arranged ventilation systems also imply that no fire slide valves have to be arranged. The shafts which were previously necessary to arrange for the laying of ducts may thus be eliminated and these volumes may instead be used for purposes increasing the yield of the operation, such as an increased number of profitable cabins. Likewise, the large fan rooms, which were previously needed to house centrally located units, can be better utilised for profitable purposes. A larger number of air treatment units entails a certain increase of the investment costs but the operating cost is reduced when the fans must overcome a smaller pressure increase than one which is caused by a longer duct system.

Also from the installation point of view, a ventilation system according to the invention is simpler to arrange and adjust. The air treatment unit and the tempering unit are installed in position and are connected to the air duct system. Once the cabin is complete, the flows are adjusted and the completed cabin can then be sealed.

Although it is advantageous, the ventilation system according to the invention is not limited to the embodiments described above. Thus, also other embodiments may be used wherein the functions included in the system are arranged in different ways. The decisive point is that a ventilation system is arranged to serve only one isolated cell or a cabin, and that the ventilation takes place directly through openings in the outer wall adjacent to the space which is to be ventilated.

## Claims

1. A ventilation arrangement comprising an isolated cell of a ship having a plurality of such isolated cells,
**characterised in that**,
- the arrangement comprises an air treatment unit, a tempering unit and a local air duct system, and
- the arrangement is housed in and/or at the isolated cell and serving this one cell.

2. A ventilation arrangement according to claim 1,
**characterised in that** the local ventilation arrangement communicates air directly through the outer wall (5).

3. A ventilation arrangement according to claim 1 or 2,
**characterised in that** the cell comprises a cabin (1).

4. A ventilation arrangement according to claim 3,
**characterised in that** the cabin (1) is a passenger cabin comprising a balcony (2).

5. A ventilation arrangement according to any of the preceding claims,
**characterised in that** the ventilation arrangement comprises means for attending to the supply of fresh air, the removal of used air, filtering, dehumidification, enthalpy return, tempering, humidification and recirculation.

6. A method for ventilation of an isolated cell of a ship having a plurality of such isolated cells,
**characterized in that** such an isolated cell is arranged to be served by at least one locally arranged ventilation arrangement (12, 15, 16, 17), whereby functions such as supply of fresh air, removal of used air, filtering, dehumidification, enthalpy return, tempering, humidification and recirculation are brought to be attended to by the local ventilation arrangement.

7. A method according to claim 6, **characterized in that** the ventilation arrangement is brought to communicate air directly through the outer wall (5).

8. Use of a ventilation arrangement according to claim 1 or a method according to claim 6 in a passenger ship.

## Patentansprüche

1. Ventilationsanordnung, umfassend eine isolierte Zelle eines Schiffs, welches eine Vielzahl derartig isolierter Zellen aufweist, **dadurch gekennzeichnet, dass**
- die Anordnung eine Luft-Aufbereitungseinheit, eine Tempereinheit und ein lokales Luftkanal-System umfasst und
- die Anordnung in und/oder bei der isolierten Zelle untergebracht ist und diese eine Zelle versorgt.

2. Ventilationsanordnung gemäß Anspruch 1, **dadurch gekennzeichnet, dass** die lokale Ventilationsanordnung Luft direkt durch die äußere Wand (5) leitet.

3. Ventilationsanordnung gemäß Anspruch 1 oder 2, **dadurch gekennzeichnet, dass** die Zelle eine Kabine (1) umfasst.

4. Ventilationsanordnung gemäß Anspruch 3, **dadurch gekennzeichnet, dass** die Kabine (1) eine Passagierkabine ist, die einen Balkon (2) umfasst.

5. Ventilationsanordnung gemäß irgendeinem der vorhergehenden Ansprüche, **dadurch gekennzeichnet, dass** die Ventilationsanordnung Mittel umfasst, die sich der Frischluftzufuhr, Abführung verbrauchter Luft, Filterung, Entfeuchtung, Wärmerückgewinnung, Tempern, Befeuchtung und Umwälzung annehmen.

6. Verfahren zur Ventilation einer isolierten Zelle eines Schiffes, welches eine Vielzahl derartig isolierter Zellen aufweist, **dadurch gekennzeichnet, dass** eine derartige Zelle angeordnet ist, um durch mindestens eine lokal angeordnete Ventilationsanordnung (12, 15, 16, 17) versorgt zu werden, wobei Funktionen, so wie Frischluftzufuhr, Abführen verbrauchter Luft, Filterung, Entfeuchtung, Wärmerückgewinnung, Tempern, Befeuchtung und Umwälzung dazu veranlasst werden, durch die lokale Ventilationsanordnung ausgeführt zu werden.

7. Verfahren gemäß Anspruch 6, **dadurch gekennzeichnet, dass** die Ventilationsanordnung dazu veranlasst wird, Luft direkt durch die äußere Wand (5) zu leiten.

8. Verwendung einer Ventilationsanordnung gemäß Anspruch 1 oder eines Verfahrens gemäß Anspruch 6 in einem Passagierschiff.

## Revendications

1. Dispositif de ventilation comprenant une cellule isolée d'un navire comportant une pluralité de ces cellules isolées, **caractérisé en ce que** :
- le dispositif comprend une unité de traitement de l'air, une unité d'adoucissement et un système d'aération local, et
- le dispositif est logé dans et/ou au niveau de la cellule isolée et servant cette cellule.

2. Dispositif de ventilation selon la revendication 1, **caractérisé en ce que** le dispositif de ventilation local établit une communication d'air directement à travers la paroi extérieure (5).

3. Dispositif de ventilation selon la revendication 1 ou 2, **caractérisé en ce que** la cellule comprend une cabine (1).

4. Dispositif de ventilation selon la revendication 3, **caractérisé en ce que** la cabine (1) est une cabine de passagers comprenant un balcon (2).

5. Dispositif de ventilation selon l'une quelconque des revendications précédentes, **caractérisé en ce que** le dispositif de ventilation comprend un moyen assurant l'alimentation en air frais, l'évacuation de l'air vicié, le filtrage, la déshumidification, le retour de l'enthalpie, l'adoucissement, l'humidification et la recirculation.

6. Procédé de ventilation d'une cellule isolée d'un navire comportant une pluralité de ces cellules isolées, **caractérisé en ce qu'**une de ces cellules isolées est agencée pour être servie par au moins un dispositif de ventilation disposé localement (12, 15, 16, 17), grâce à quoi des fonctions telles que l'alimentation en air frais, l'évacuation de l'air vicié, le filtrage, la déshumidification, le retour de l'enthalpie, l'adoucissement, l'humidification et la recirculation sont assurées par le dispositif de ventilation local.

7. Procédé selon la revendication 6, **caractérisé en ce que** le dispositif de ventilation est conçu pour établir une communication d'air directement à travers la paroi extérieure (5).

8. Utilisation d'un dispositif de ventilation conforme à la revendication 1 ou d'un procédé conforme à la revendication 6 dans un paquebot.
